# EUROPEAN PATENT APPLICATION

(11) **EP 0 873 683 A1**
(43) Date of publication of application: **28.10.1998**
(21) Application number: 97201158.9
(22) Date of filing: 21.04.1997
(51) Int. Cl.: A01K 5/01, A01K 7/00

(54) **Pet feeding dish**

(71) Applicant: Snoeks Beheer B.V., 2153 GB Nieuw-Vennep (NL)
(72) Inventor: Wiering, Johannes Adrianus, 2032 RB Haarlem (NL)

(57) **Abstract**

An animal feed and / or water vessel (of any suitable size or shape) which is made from moulded or formed plastic, fabricated or formed metal or other suitable material or combinations of any of these materials and has, as part of its design, a bended edge to form a barrier on the upper part of the dish as to prevent spoilage of the content.

## Description

There are many various types of moulded plastic, metal ceramic or concrete water troughs or feed dishes for small pets (such as cats and dogs etc).

Present pet feeding dishes are usually of a light construction and animals or persons can easily spill water or food by touching or tipping over the dish. This can mean unnecessary spoilage and annoyances when cleaning up.

The invention is designed to overcome the spilling of water, food or other fluid, while animals can easily access the contents within the dish. It is mainly designed to keep fluids in the dish under all usual occuring circumstances as bumping, kicking against etc. The dish can even be turned upside down without losing the fluid from the dish. This means the product is well suited for situations where fluids would usually be spilled, for instance feeding animals in cars while driving or on boats.

The invention is a feed or water vessel (of any size or shape required) which has a special bend at the top as to prevent the outflow of water or food. The size of the product is determined as a result of the needed opening of the dish at the top for easy access by animals and the contents which should be stored in the space behind the bended lip when turned upside down.

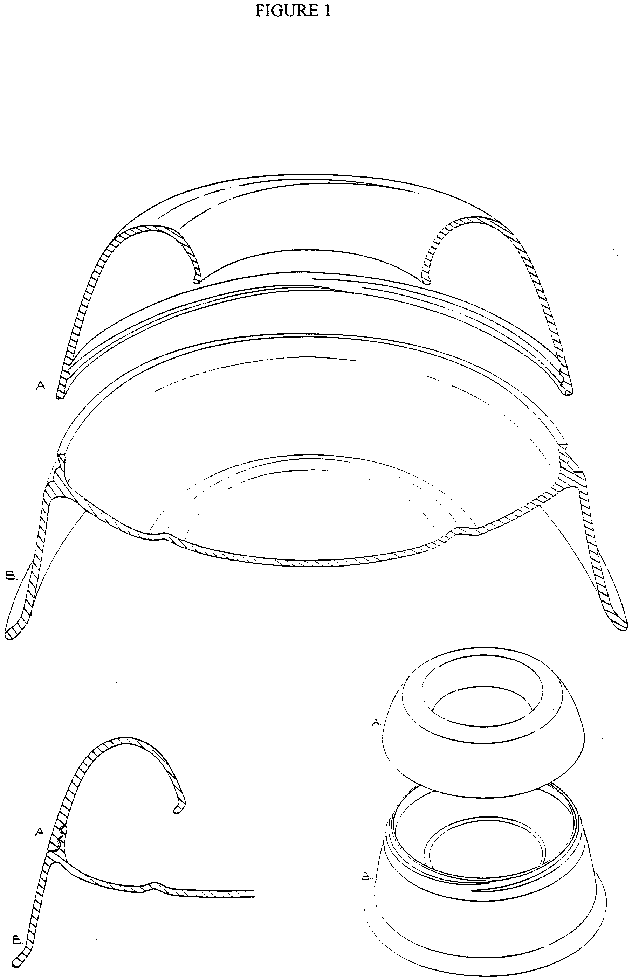

There is one basic design as shown in figure 1. The product can be made out of moulded plastic, fabricated or formed metal or a simalar construction. The product consists of two major pieces (A) en (B) which can be screwed or plugged together with a watertight construction technique. The construction can be reached through a large screw thread or by the use of matched flanges. The use of seals or gaskets may be required.

The two piece design is necessary for the hygiene of the product. Constructed in this way it can be cleaned easily while the bended lip can be reached with a cleaning brush or cloth. It is also necessary for replacing the contents of the dish. Another advantage of the bend is that the lip constructed this way is harmless for animals.

Similar designs would be employed in different sizes, to suit the type and size of the animals to be fed or watered. It will be obvious to persons reading this specification that numerous other variations and modifications are obvious to persons skilled in the art. Such variations and modifications should, however, be considered to fall within the scope of the present invention as hereinbefore described and as hereinafter claimed.

## Claims

1. A pet feeding dish (vessel or bowl) for food or water or other fluids which has, as part of its design, a bended edge to form a barrier on the upper part of the dish as to prevent spoilage of the content.

2. A pet feeding dish as claimed in Claim (1) which is made from moulded or formed plastic, fabricated or formed metal or other suitable material or combinations of any of these materials.

3. A pet feeding dish as described made of two pieces fastened by suitable means including mating female and male screw threads, mating flanges clipped, screwed of bolted together.

4. A pet feeding dish as described in any of the preceding claims being of any suitable size and shape to suit the application.
